# EUROPÄISCHE PATENTSCHRIFT

(11) **EP 2 780 205 B1**
(45) Veröffentlichungstag und Bekanntmachung des Hinweises auf die Patenterteilung: **23.09.2020**
(21) Anmeldenummer: 12780096.9
(22) Anmeldetag: 19.10.2012
(51) Int. Cl.: B60T 17/22, B60W 50/14

(54) **KRAFTFAHRZEUG**
MOTOR VEHICLE
VÉHICULE AUTOMOBILE

(30) Priorität: 16.11.2011 DE 102011118687
(43) Veröffentlichungstag der Anmeldung: 24.09.2014
(73) Patentinhaber: Audi AG, 85045 Ingolstadt (DE)
(72) Erfinder: MAYER, Stefan, 85080 Gaimersheim (DE)
(74) Vertreter: Brandt, Kai
(86) Internationale Anmeldenummer: PCT/EP2012/004393
(87) Internationale Veröffentlichungsnummer: WO 2013/072001

(56) Entgegenhaltungen:
- EP-A1- 1 359 077
- EP-A1- 1 359 077
- EP-A1- 1 359 078
- DE-A1- 4 020 693
- DE-A1- 4 024 771
- DE-A1- 10 150 276
- DE-A1- 10 237 457
- DE-A1-102005 034 097
- DE-A1-102005 055 118
- DE-A1-102008 009 098
- DE-A1-102008 024 627
- US-B1- 7 418 788

## Beschreibung

Die Erfindung betrifft ein Kraftfahrzeug, umfassend wenigstens ein Antriebsaggregat, wenigstens eine Bremsvorrichtung, wenigstens eine sich bei Betrieb des Antriebsaggregats und/oder der Bremsvorrichtung erwärmende Komponente, eine Temperatursensorik zur Erfassung einer Temperatur der Komponente, sowie eine mit der Temperatursensorik kommunizierende Steuereinrichtung.

Es ist bekannt, dass sich bestimmte Komponenten eines Kraftfahrzeugs bei Betrieb, d. h. insbesondere bei Betrieb des Antriebsaggregats, wie z. B. bei Betrieb einer Brennkraftmaschine, erwärmen. Weitere, von einer kraftfahrzeugseitig vorgesehenen Bremsvorrichtung umfasste Komponenten erfahren ebenso eine Erwärmung bei Inbetriebnahme der Bremsvorrichtung, d. h. bei Bremsvorgängen des Kraftfahrzeugs.

Sofern die entsprechenden Komponenten des Kraftfahrzeugs für Personen zugänglich sind, besteht die Gefahr von verbrennungsbedingten Verletzungen der Personen, sobald diese in Kontakt mit den häufig auf hohe Temperaturen oberhalb 100°C erwärmten Komponenten geraten. Eine besondere Gefahr liegt dabei in der Tatsache, dass die Ist-Temperatur der jeweiligen Komponenten zumeist von außen, d. h. insbesondere optisch, nicht erkennbar ist.

DE 10 2005 055 118 A1 betrifft eine Scheibenbremse für Fahrzeuge und einen Bremsbelag für eine Scheibenbremse, wobei der Bremsbelag mit wenigstens einem Temperaturindikator ausgestattet sein soll, der nach Überschreiten der zulässigen Betriebstemperatur seinen Zustand ändert und nach Überschreiten einer zulässigen Betriebstemperatur in seiner Stellung verharrt. Somit kann in einem Schadensfall möglichst genau nachgewiesen werden, dass ein aufgetretener Schaden oder der Abfall der maximalen Bremskraft auf das Überschreiten der zulässigen Betriebstemperatur bzw. auf eine thermische Überlastung der Scheibenbremse zurückzuführen ist.

In US 7 418 788 B1 ist ein Indikator für einen Flüssigkeitsfüllstand in einem Behältnis beschrieben, wobei der Indikator ein wärmeempfindliches Material umfasst, das bei Wärmeeinwirkung seine Farbe ändert. Der Indikator kann Teil eines Messstabes bilden und in einem Motor oder einem Getriebe eingesetzt werden, so dass neben einem Ölfüllstand auch dessen Temperatur bestimmt werden kann.

DE 40 24 771 A1 offenbart ein Verfahren zur Überwachung der Temperatur der Bremsbelagsätze eines Kraftfahrzeugs mittels Temperatursensoren. Deren Temperatursignale werden an eine Steuer- und Überwachungseinheit übermittelt, in der die Temperatursignale weiterverarbeitet und mit einem vorgebbaren Temperaturgrenzwert verglichen werden. Um einem Führer des Kraftfahrzeugs während des Betriebs des Fahrzeugs die Überhitzung eines Bremsbelagsatzes zu signalisieren, ist vorgesehen, dass die Steuer- und Überwachungseinheit über Steuerleitungen mit akustischen Meldern und/oder einer optischen Anzeige verbunden ist.

EP 1 359 077 A1 beschreibt ein Verfahren zur Überlast-Überwachung von Fahrzeugbremsen von elektronisch geregelten Bremssystemen von Fahrzeugen, bei dem die Temperaturen der Radbremsen der Räder des Fahrzeugs oder der Teilfahrzeuge der Fahrzeugkombination ermittelt und mit einem vorbestimmten Temperaturgrenzwert verglichen werden. Dabei wird in Abhängigkeit der Anzahl der Achsen, an denen die Temperatur der Radbremsen den Temperaturgrenzwert überschreitet, ein zweistufiges Fehler-Warnsignal ausgegeben. Die Warnsignale können dabei akustische und/oder optische oder subjektiv zu empfindende Signale sein.

Der Erfindung liegt das Problem zugrunde, ein Kraftfahrzeug anzugeben, welches eine einfache Abschätzbarkeit der Temperatur von sich im Betrieb des Antriebsaggregats und/oder der Bremsvorrichtung erwärmenden Komponenten ermöglicht.

Das Problem wird durch ein Kraftfahrzeug der eingangs genannten Art gelöst, welches sich erfindungsgemäß dadurch auszeichnet, dass die Komponente wenigstens ein Warnmittel umfasst, welches bei Vorliegen einer eine Überschreitung einer komponentenspezifischen Grenztemperatur betreffenden Information zur Ausgabe einer optischen Warninformation durch die Steuereinrichtung ansteuerbar ist.

Das erfindungsgemäß vorgesehene, von der jeweiligen sich im Betrieb des Antriebsaggregats und/oder der Bremsvorrichtung erwärmenden Komponente des Kraftfahrzeugs umfasste Warnmittel dient dazu, eine Person auf die Erwärmung der jeweiligen Komponente in Form der Ausgabe einer optischen Warninformation hinzuweisen. Die optische Warninformation kann in Abhängigkeit des jeweils eingesetzten Warnmittels grundsätzlich auf zwei unterschiedliche Arten ausgegeben werden. Zum einen ist es möglich, dass ein Warnmittel vorgesehen ist, welches bei Überschreiten einer komponentenspezifischen Grenztemperatur durch die Komponente zur Ausgabe einer optischen Warninformation ausgebildet ist. Dieses Warnmittel gibt automatisch, bei Überschreiten einer komponentenspezifischen Grenztemperatur durch die jeweilige Komponente eine optische Warninformation aus. Die Funktion eines entsprechenden Warnmittels kann beispielsweise auf materialspezifischen bzw. materialinhärenten, sich in Abhängigkeit der Temperatur des Warnmittels, welches selbstverständlich temperaturgekoppelt mit der jeweiligen Komponente ist, verändernden, insbesondere optischen, Eigenschaften des Warnmittels beruhen. Hierzu werden im Weiteren noch beispielhafte Ausführungsformen genannt.

Die komponentenspezifische Grenztemperatur wird in diesem Fall insbesondere durch die Materialeigenschaften, insbesondere die chemischphysikalische Struktur, des Warnmittels bestimmt. Mithin kann durch eine geeignete Zusammensetzung des Warnmittels eine auf eine bestimmte Komponente abgestimmte Grenztemperatur eingestellt werden, bei Erreichen oder Überschreiten dieser das Warnmittel eine optische Warninformation ausgibt. Es ist denkbar, dass Warnmittel für verschiedene Komponenten mit jeweils unterschiedlichen komponentenspezifischen Grenztemperaturen vorgesehen sind.

Erfindungsgemäß ist ein, gegebenenfalls weiteres, Warnmittel vorgesehen, welches bei Vorliegen einer eine Überschreitung einer komponentenspezifischen Grenztemperatur betreffenden Information zur Ausgabe einer optischen Warninformation ansteuerbar ist. Dieses Warnmittel erhält also bei Vorliegen einer entsprechenden Information, welche eine Überschreitung einer komponentenspezifischen Grenztemperatur durch eine Komponente betrifft, z. B. von einer kraftfahrzeugseitig vorgesehenen Steuereinrichtung, welche gleichermaßen die eine Überschreitung einer komponentenspezifischen Grenztemperatur betreffende Information ermitteln kann, ein Steuersignal zur Ausgabe einer entsprechenden optischen Warninformation. Im Gegensatz zur obigen Ausführungsform eines Warnmittels gibt das Warnmittel hier die optische Warninformation demnach nicht automatisch, sondern in Abhängigkeit eines Steuersignals, welches Steuersignal wiederum nur bei Vorliegen der eine Überschreitung einer komponentenspezifischen Grenztemperatur betreffenden Information erzeugt wird, aus.

Hierbei ist der jeweiligen Komponente zweckmäßig wenigstens eine die Ist-Temperatur erfassende, mit dem Warnmittel verbundene Temperatursensorik zur Ermittlung der eine Überschreitung der komponentenspezifischen Grenztemperatur betreffenden Information zugeordnet. Die Temperatursensorik liefert ein genaues Abbild der Ist-Temperatur der jeweiligen Komponente, so dass die von dieser gelieferten komponentenspezifischen Temperatursignale herangezogen werden, um unter Berücksichtigung der, beispielsweise in einem kraftfahrzeugseitig vorgesehenen Speichermittel hinterlegten, komponentenspezifischen Grenztemperatur zu überprüfen, ob eine entsprechende eine Überschreitung einer komponentenspezifischen Grenztemperatur betreffende Information zu erzeugen ist. Dabei ist insbesondere ein Vergleich der Ist-Temperatur der jeweiligen Komponente mit der jeweiligen komponentenspezifischen Grenztemperatur vorzunehmen.

Eine Temperatursensorik kann dabei mehrere mit der jeweiligen Komponente verbundene, auf dieser verteilt angeordnete Temperatursensoren aufweisen. Derart lassen sich beispielsweise auch Temperaturprofile respektive Temperaturgradienten der jeweiligen Komponente ermitteln, um so ein umfassendes Abbild der Temperatur respektive der Temperaturverteilung der jeweiligen Komponente zu erhalten. Mithin ist es möglich, die Ausgabe der optischen Warninformation bzw. die Ansteuerung des Warnmittels in Abhängigkeit der Temperaturverteilung einer Komponente anzupassen. Demzufolge kann ein Warnmittel z. B. für wärmere Bereiche einer Komponente beispielsweise eine erste, gegebenenfalls z. B. aufgrund einer erhöhten Farbintensität, deutlicher erkennbare optische Warninformationen und für vergleichsweise kältere Bereiche der Komponente eine im Vergleich weniger deutlich erkennbare optische Warninformation ausgeben.

Es ist auch denkbar, dass die eine Überschreitung einer komponentenspezifischen Grenztemperatur betreffende Information auf einem das Abkühlverhalten der jeweiligen Komponente betreffenden Modell basiert. In diesem Fall wird die Ist-Temperatur der jeweiligen Komponente nicht bestimmt, sondern auf Basis eines geeigneten Modells, gegebenenfalls unter Verwendung entsprechender Kennfelder, welche eine Zuordnung von Betriebszuständen des Kraftfahrzeugs und/oder der jeweiligen Komponente zu bestimmten Temperaturen der jeweiligen Komponente erlauben, abgeschätzt. Dabei werden insbesondere das Aufwärm- und/oder Abkühlverhalten der jeweiligen Komponente betreffende komponentenspezifische Kennwerte berücksichtigt. In diesem Zusammenhang ist es auch denkbar, das Aufwärm- bzw. Abkühlverhalten der jeweiligen Komponente zu simulieren und anhand der Simulation die eine Überschreitung einer komponentenspezifischen Grenztemperatur betreffende Information zu ermitteln.

Die komponentenspezifische Grenztemperatur wird insbesondere durch werksseitig vorgegebene oder benutzerseitig vorgebbare komponentenspezifische Grenztemperaturen definiert. Mithin kann eingestellt bzw. einstellbar sein, wann bzw. bei Erreichen welcher Ist-Temperatur der jeweiligen Komponente eine entsprechende eine Überschreitung einer komponentenspezifischen Grenztemperatur betreffende Information erzeugt und im Weiteren das Warnmittel zur Ausgabe der optischen Warninformation angesteuert wird.

Eine entsprechende Komponente kann z. B. ein Teil der Auspuffanlage, insbesondere ein Endrohr, und/oder ein Teil der Bremsanlage, insbesondere eine Bremsscheibe, und/oder das Antriebsaggregat des Kraftfahrzeugs sein. Selbstverständlich ist diese Aufzählung nicht abschließend.

Das Warnmittel kann bei Überschreitung der komponentenspezifischen Grenztemperatur zur Änderung seiner Farbe und/oder seiner Transmission ausgebildet sein. Beide Effekte beruhen im Wesentlichen auf einer wenigstens teilweisen bzw. zeitweisen Änderung der chemischen Struktur des Warnmittels, welche einen Farbumschlag und/oder eine Änderung der Transmission, d. h. der Durchlässigkeit für sichtbares Licht bzw. des Absorptionsverhaltens gegenüber sichtbarem Licht, herbeiführt. In ersterem Fall bewirkt der temperaturbedingte Farbumschlag des Warnmittels eine Färbung des Warnmittels in einen optisch gut erkennbaren bzw. warnenden Farbton. Im zweiten Fall bedeckt das Warnmittel zweckmäßig eine optische gut erkennbare bzw. warnende Farbschicht, welche durch die temperaturbedingte Änderung der Transmission des Warnmittels sichtbar wird. D. h. das Warnmittel wird bei Überschreiten der komponentenspezifischen Grenztemperatur weitgehend oder vollständig transparent, was in der Regel bei Transmission oberhalb ca. 80 % gegeben ist, so dass die darunterliegende optisch gut erkennbare bzw. warnende Farbschicht zum Vorschein tritt.

Bevorzugt liegt das Warnmittel in dieser Ausführungsform als eine auf der Komponente wenigstens abschnittsweise aufgebrachte thermochrome Beschichtung und/oder ein mit der Komponente verbundenes thermochromes Element und/oder ein innerhalb des die Komponente bildenden Materials enthaltenes thermochromes Material vor. Der Effekt der Thermochromie sowie entsprechende Materialien sind bekannt. Es handelt sich um einen Effekt des reversiblen oder irreversiblen Farbumschlags einer Verbindung bei Veränderung der Temperatur. Bei thermochromen Verbindungen tritt in einem bestimmten Temperaturbereich ein struktureller Phasenübergang auf, welcher dazu führt, dass ein anderer Bereich des sichtbaren Lichtspektrums absorbiert wird. Das verbleibende reflektierte Licht setzt sich zu einer neuen Färbung des thermochromen Materials zusammen.

Wie erwähnt, kann das thermochrome Material z. B. als Beschichtung auf der jeweiligen Komponente aufgebracht sein, als mit der jeweiligen Komponente verbundenes Element etwa in Form einer Klebefolie oder eines Aufklebers mit der jeweiligen Komponente verbunden sein oder als Bestandteil des die Komponente bildenden Materials vorliegen. In den beiden erstgenannten Alternativen ist es möglich, das thermochrome Material zur Verbesserung der Erkennbarkeit wenigstens teilweise mit dreidimensionalen Oberflächenstrukturierungen etwa in Form von Prismen oder Fresnellinsen auszubilden.

Alternativ ist es denkbar, dass das Warnmittel bei Überschreitung der komponentenspezifischen Grenztemperatur und/oder bei Vorliegen der eine Überschreitung einer komponentenspezifischen Grenztemperatur betreffenden Information zur wenigstens teilweisen Beleuchtung der Komponente ausgebildet ist. Das Warnmittel dient in dieser Ausführungsform als Leuchtmittel im Sinne einer Lampe oder LED, welches Leuchtmittel eine Beleuchtung der jeweiligen Komponente bedingt, sofern eine eine Überschreitung einer komponentenspezifischen Grenztemperatur betreffenden Information vorliegt. Mithin wird in Abhängigkeit des Vorliegens der Information das als Leuchtmittel ausgebildete Warnmittel angesteuert respektive in Betrieb genommen. Die Beleuchtung der jeweiligen Komponente durch das Leuchtmittel kann direkt oder indirekt erfolgen. Mithin kann das Leuchtmittel die jeweilige Komponente direkt anstrahlen oder mittelbar über ein optisches Element zur Erzeugung einer indirekten Beleuchtung anstrahlen. Grundsätzlich wird eine möglichst homogene Beleuchtung respektive Anstrahlung der jeweiligen Komponente angestrebt.

Bevorzugt ist in allen Fällen die optische Warninformation von dem Warnmittel emittiertes, insbesondere rötliches oder rotes, Licht. Rötlich oder rot gefärbtes Licht ist für Personen in der Regel besonders gut erkennbar und deutet gleichermaßen auf ein gewisses Gefährdungs- bzw. Verletzungsrisiko der jeweiligen Komponente hin, so dass Personen auf einfache Weise erkennen können, dass eine Berührung der jeweiligen Komponente mit potentiellen Gefährdungen bzw. Verletzungen verbunden sein kann. Selbstverständlich sind grundsätzlich auch andere Farbtöne bzw. Färbungen der optischen Warninformationen möglich. Ein willkommener Nebeneffekt ist dabei, dass die entsprechenden Komponenten des Kraftfahrzeugs durch die Ausgabe der optischen Warninformation, d. h. insbesondere durch die Ausgabe gefärbten, d. h. insbesondere rötlichen bzw. roten, Lichts, eine optisch ansprechende Wirkung aufweisen und als Symbole für Kraft und Dynamik wahrgenommen werden.

In zweckmäßiger Weiterbildung der Erfindung ist es vorgesehen, dass die Farbintensität der optischen Warninformation von der Temperatur der jeweiligen Komponente abhängt. Derart ist es noch deutlicher möglich, dass von der jeweiligen Komponente ausgehende Gefährdungs- bzw. Verletzungsrisiko darzustellen, so dass entsprechende auf hohe Temperaturen der Komponente hinweisende hohe Farbintensitäten z. B. ein entsprechend hohes Gefährdungs- bzw. Verletzungsrisiko darstellen. Weiterhin ist es möglich, dass die Temperaturänderung der jeweiligen Komponente z. B. bei Abkühlvorgängen, optisch verfolgt werden kann, so dass beispielsweise ein Zeitpunkt, in dem von der Komponente nur noch ein geringfügiges Gefährdungs- bzw. Verletzungsrisiko ausgeht, erkennbar ist.

In einer weiteren Ausführungsform der Erfindung ist das Warnmittel oder ein weiteres kraftfahrzeugseitig vorgesehenes Warnmittel bei Überschreitung der komponentenspezifischen Grenztemperatur und/oder bei Vorliegen der eine Überschreitung einer komponentenspezifischen Grenztemperatur betreffenden Information zusätzlich zur Ausgabe einer akustischen Warninformation ausgebildet. Die akustische Warninformation, welche beispielsweise als ein Warnton einer kraftfahrzeugseitig vorgesehenen Hupe ausgegeben werden kann, liefert dem sich der jeweiligen erwärmten Komponente des Kraftfahrzeugs annähernden Objekt einen zusätzlichen Hinweise auf das von dieser ausgehende Gefährdungs- bzw. Verletzungsrisiko.

Zweckmäßig kann das erfindungsgemäße Kraftfahrzeug ferner wenigstens einen Näherungssensor zur Ermittlung eines Abstands eines Objekts zu der Komponente umfassen, wobei das Warnmittel bei Vorliegen einer eine Unterschreitung eines bestimmten Abstandsschwellwerts durch das Objekt betreffenden Abstandsinformation zur Ausgabe der optischen Warninformation ansteuerbar ist. In diesem Fall wird zweckmäßig, insbesondere zusätzlich, zu dem Vorliegen der eine Überschreitung einer komponentenspezifischen Grenztemperatur betreffenden Information, eine Ansteuerung des Warnmittels zur Ausgabe der optischen Warninformation erst vorgenommen, wenn eine Unterschreitung eines bestimmten Abstandsschwellwerts durch das Objekt zu der jeweiligen Komponente betreffende Information vorliegt. Mithin wird hier die Unterschreitung des Mindestabstands des Objekts zu der jeweiligen Komponente als zusätzlich zu erfüllende Randbedingung verwendet, ohne welche eine entsprechende Ansteuerung des Warnmittels zur Ausgabe der optischen Warninformation, sowie gegebenenfalls auch der akustischen Warninformation, nicht erfolgt. Der Mindestabstand kann werkseitig vorgegeben oder bedienerseitig vorgebbar sein.

Vorteilhaft ist die optische und/oder gegebenenfalls akustische Warninformation nur bei Stillstand des Kraftfahrzeugs ausgebbar. Derart können auf die Ausgabe der optischen Warninformation zurückzuführende Ablenkungen des Fahrers aber auch anderer Verkehrsteilnehmer während der Fahrt ausgeschlossen werden.

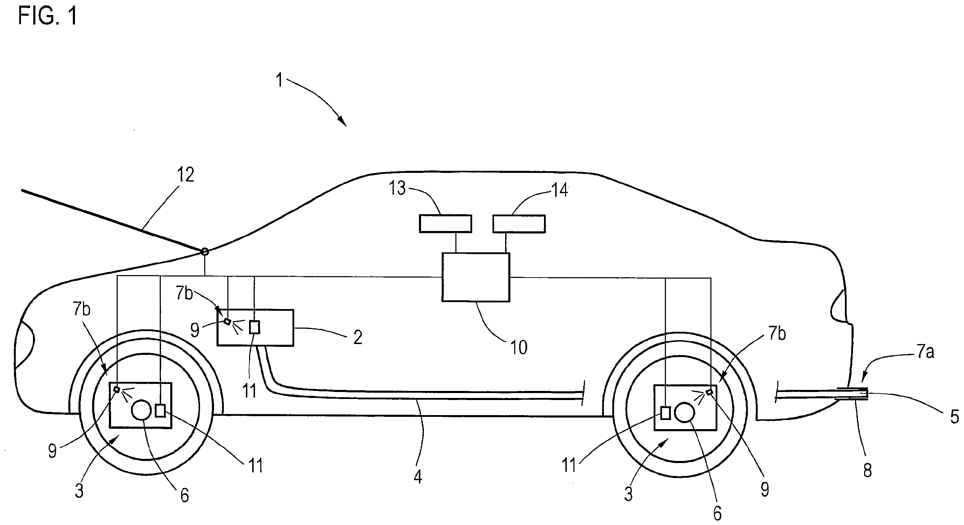

Weitere Vorteile, Merkmale und Einzelheiten der Erfindung ergeben sich aus den im Folgenden beschriebenen Ausführungsbeispielen sowie anhand der Zeichnung. Dabei zeigt die einzige Figur eine Prinzipdarstellung eines erfindungsgemäßen Kraftfahrzeugs.

Die Figur zeigt eine Prinzipdarstellung eines erfindungsgemäßen Kraftfahrzeugs 1. Das Kraftfahrzeug 1 umfasst ein Antriebsaggregat 2 etwa in Form einer Brennkraftmaschine, und mehrere den Rädern des Kraftfahrzeugs 1 zugeordnete Bremsvorrichtungen 3 sowie mehrere sich bei Betrieb des Antriebsaggregats 2 und/oder der Bremsvorrichtungen 3 erwärmende Komponenten. Hierzu zählen beispielsweise Teile der Auspuffanlage 4, insbesondere das dieser zugehörige Endrohr 5, und/oder Teile der Bremsvorrichtungen 3, wie insbesondere die Bremsscheiben 6. Selbstverständlich ist auch das Antriebsaggregat 2 selbst als eine entsprechende Komponente des Kraftfahrzeugs 1 zu sehen. Grundsätzlich sind entsprechende Komponenten des Kraftfahrzeugs 1 von außen wenigstens teilweise sichtbar und wenigstens teilweise zugänglich.

Problematisch ist, dass die betriebsbedingte hohe Temperatur der jeweiligen Komponenten von außen, insbesondere optisch, nur schwer erkennbar ist, so dass bei Annäherung eines Objekts, wie z. B. einer Person, an eine entsprechende Komponente respektive bei Kontaktieren einer entsprechenden Komponente durch ein Objekt ein Gefährdungs- bzw. Verletzungsrisiko für das Objekt bestehen kann.

Deshalb ist es bei dem erfindungsgemäßen Kraftfahrzeug 1 vorgesehen, dass eine entsprechende Komponente des Kraftfahrzeugs 1 ein Warnmittel 7b umfasst, das bei Vorliegen einer eine Überschreitung einer komponentenspezifischen Grenztemperatur betreffenden Information I zur Ausgabe einer optischen Warninformation ansteuerbar ist. Ergänzend kann vorgesehen sein, dass eine entsprechende Komponente des Kraftfahrzeugs 1 wenigstens ein Warnmittel 7a umfasst, welches bei Überschreiten einer komponentenspezifischen Grenztemperatur durch die Komponente zur Ausgabe einer optischen Warninformation ausgebildet ist.

Das Warnmittel 7a ist als thermochrome Beschichtung 8 auf dem Endrohr 5 der Auspuffanlage 4 aufgebracht. Mithin ist das Warnmittel 7a, d. h. die thermochrome Beschichtung 8, bei Überschreitung der komponentenspezifischen Grenztemperatur zur Änderung seiner Farbe ausgebildet. Gegebenenfalls kann auch eine temperaturbedingte Änderung der Transmission der thermochromen Beschichtung 8 vorgesehen sein. Die thermochrome Beschichtung 8 weist eine chemische Struktur auf, welche bei Überschreiten einer Grenztemperatur von z. B. 100°C einen inhärent materialbedingten Farbumschlag von einer beispielsweise dunklen Ausgangsfärbung in einen rötlichen bzw. roten, d. h. optisch gut erkennbaren bzw. warnenden Farbton erfährt. Neben der Beschichtung des Endrohrs 5 mit der thermochromen Beschichtung 8 ist es auch möglich, eine thermochrome Klebefolie oder einen thermochromen Aufkleber auf dem Endrohr 5 anzubringen. Sowohl die thermochrome Beschichtung 8 als auch entsprechende thermochrome Klebefolien respektive Aufkleber können eine bestimmte dreidimensionale Oberflächenstrukturierung aufweisen, um deren optische Erkennbarkeit zu verbessern.

Das Warnmittel 7b ist als Leuchtmittel 9 etwa in Form wenigstens einer LED ausgebildet. Die den Bremsvorrichtungen 3 respektive dem Antriebsaggregat 2 zugeordneten bzw. auf diese gerichteten Leuchtmittel 9 sind über eine Steuereinrichtung 10 ansteuerbar, d. h. zu- und abschaltbar sowie gegebenenfalls in der Farbintensität des von diesen ausgestrahlten Lichts veränderbar, d. h. dimmbar. Die Dimmbarkeit ermöglicht es, dass die Farbintensität der von den Leuchtmitteln 9 ausgegebenen optischen Warninformation, d. h. das von diesen emittierten Lichts in Abhängigkeit der Temperatur der jeweiligen Komponente variierbar ist,

Das von dem Leuchtmittel 9 emittierte Licht ist rötlich bzw. rot, d. h. es weist einen optisch gut erkennbaren bzw. warnenden Farbton auf. Ein willkommener Nebeneffekt ist dabei, dass die entsprechend durch die Leuchtmittel 9 rötlich bzw. rot beleuchteten Komponenten des Kraftfahrzeugs 1 eine optisch ansprechende Wirkung aufweisen und insbesondere die entsprechenden Komponenten als Symbole für Kraft und Dynamik wahrgenommen werden. Die gleiche Wirkung hat selbstverständlich auch das von der auf dem Endrohr 5 aufgebrachten thermochromen Beschichtung 8 emittierte Licht.

Die Steuereinrichtung 10 ist ebenso zur Überprüfung des Vorliegens der eine Überschreitung einer komponentenspezifischen Grenztemperatur betreffenden Information I ausgebildet. Hierfür kommuniziert die Steuereinrichtung 10 mit den jeweiligen Komponenten zugeordneten, jeweils wenigstens einen Temperatursensor umfassenden Temperatursensoriken 11. Die Temperatursensoriken 11 sind zur Ermittlung der Überschreitung der komponentenspezifischen Grenztemperatur ausgebildet, d. h. sie erfassen die Ist-Temperatur der jeweiligen Komponenten und liefern diese signalartig an die Steuereinrichtung 10, welche im Weiteren einen Vergleich der jeweiligen Ist-Temperaturen der jeweiligen Komponenten mit in einem Speicher hinterlegten komponentenspezifischen Temperaturgrenzwerten vornimmt, um derart eine Überprüfung des Vorliegens der eine Überschreitung einer komponentenspezifischen Grenztemperatur betreffenden Information I vorzunehmen.

Es ist ferner denkbar, dass eine eine Überschreitung einer komponentenspezifischen Grenztemperatur betreffende Information I auf einem das Aufwärm- bzw. Abkühlverhalten einer jeweiligen Komponente betreffenden Modell basiert. In diesem Fall sind in der Steuereinrichtung 10 geeignete Rechenalgorithmen vorhanden, welche eine Abschätzung der Ist-Temperatur der jeweiligen Komponente erlauben, um im Weiteren das Vorliegen der eine Überschreitung einer komponentenspezifischen Grenztemperatur betreffenden Information I zu überprüfen.

Die Information I kann insofern komponentenspezifisch sein, als beispielsweise das Antriebsaggregat 2 seine komponentenspezifische Grenztemperatur überschritten haben kann, so dass das diesem zugehörige Warnmittel 7b seitens der Steuereinrichtung 10 über entsprechende Ansteuersignale in Betrieb genommen wird und eine Beleuchtung des Antriebsaggregats 2 vornimmt, wohingegen die Bremsscheiben 6 der Bremsvorrichtungen 3 ihre jeweiligen komponentenspezifischen Grenztemperaturen nicht erreicht haben, so dass die diesen zugeordneten Warnmittel 7b nicht über entsprechende, von der Steuereinrichtung 10 gesendete Steuersignale angeschaltet werden.

Im Falle der dem Antriebsaggregat 2 zugehörigen Warnmittel 7b ist deren Ansteuerung zweckmäßig an ein Öffnen der Motorklappe 12 geknüpft, welche seitens der Steuerungseinrichtung 10 ebenfalls über eine geeignete Sensorik erfassbar ist. Mithin sind die dem Antriebsaggregat 2 zugehörigen Warnmittel 7b nur bei geöffneter Motorklappe 12 ansteuerbar, d. h. in Betrieb nehmbar.

Das Kraftfahrzeug 1 umfasst ferner einen Näherungssensor 13 zur Ermittlung eines Abstands eines Objekts zu einer entsprechenden Komponente des Kraftfahrzeugs 1. Die Warnmittel 7b werden seitens der Steuereinrichtung 10 sonach gegebenenfalls nur bei Vorliegen einer eine Unterschreitung eines bestimmten Abstandsschwellwerts durch das Objekt betreffenden Abstandsinformation zur Ausgabe der optischen Warninformation angesteuert. Demzufolge emittieren die Leuchtmittel 9 nur rötliches bzw. rotes Licht, sofern sich ein Objekt in einem unterhalb des Abstandsschwellwerts liegenden Abstand zu der jeweiligen Komponente des Kraftfahrzeugs 1 befindet.

In diesem Zusammenhang ist es ferner zweckmäßig, wenn ein weiteres kraftfahrzeugseitig vorgesehenes Warnmittel 14 in Form einer Hupe oder dergleichen bei Überschreitung der komponentenspezifischen Grenztemperatur und/oder bei Vorliegen der eine Überschreitung einer komponentenspezifischen Grenztemperatur betreffenden Information I zusätzlich zur Ausgabe einer akustischen Warninformation ausgebildet ist. Mithin kann ein sich an eine erwärmte Komponente des Kraftfahrzeugs 1 annäherndes Objekt von dem von ihr ausgehenden Gefährdungs- bzw. Verletzungsrisiko nicht nur optisch, sondern auch akustisch gewarnt werden.

Vorteilhaft ist die optische und/oder gegebenenfalls akustische Warninformation nur bei Stillstand des Kraftfahrzeugs 1 ausgebbar. Demzufolge steuert die Steuereinrichtung 10 die Warnmittel 7b, d. h. die Leuchtmittel 9 sowie das Warnmittel 14 nur bei erfasstem Stillstand des Kraftfahrzeugs 1, welcher beispielsweise über eine Ermittlung der Drehgeschwindigkeit der Räder des Kraftfahrzeugs 1 ermittelbar ist, an. Die Gefahr einer möglicherweise gefährlichen Ablenkung des Fahrers während der Fahrt durch die Warnmittel 7b in Form der Leuchtmittel 9 beleuchteten Komponenten ist insofern ausgeschlossen. Auch andere Verkehrsteilnehmer können durch die Warnmittel 7b, 14 nicht abgelenkt werden.

## Patentansprüche

1. Kraftfahrzeug (1), umfassend wenigstens ein Antriebsaggregat (2), wenigstens eine Bremsvorrichtung (3), wenigstens eine sich bei Betrieb des Antriebsaggregats (2) und/oder der Bremsvorrichtung (3) erwärmende Komponente, eine Temperatursensorik (11) zur Erfassung einer Temperatur der Komponente sowie eine mit der Temperatursensorik (11) kommunizierende Steuereinrichtung (10),
**dadurch gekennzeichnet,**
**dass** die Komponente wenigstens ein Warnmittel (7b) umfasst, welches nur bei Vorliegen einer eine Überschreitung einer komponentenspezifischen Grenztemperatur betreffenden Information (I) zur Ausgabe einer optischen Warninformation durch die Steuereinrichtung (10) ansteuerbar ist.

2. Kraftfahrzeug nach Anspruch 1,
**dadurch gekennzeichnet,**
**dass** die Komponente wenigstens ein zusätzliches Warnmittel (7a) umfasst, welches bei Überschreiten einer komponentenspezifischen Grenztemperatur durch die Komponente zur Ausgabe einer optischen Warninformation ausgebildet ist.

3. Kraftfahrzeug nach Anspruch 2,
**dadurch gekennzeichnet,**
**dass** das zusätzliche Warnmittel (7a) als eine auf der Komponente wenigstens abschnittsweise aufgebrachte thermochrome Beschichtung (8) und/oder ein mit der Komponente verbundenes thermochromes Element und/oder ein innerhalb des die Komponente bildenden Materials enthaltenes thermochromes Material ausgebildet ist.

4. Kraftfahrzeug nach Anspruch 2 oder 3,
**dadurch gekennzeichnet,**
**dass** das zusätzliche Warnmittel (7a) bei Überschreitung der komponentenspezifischen Grenztemperatur zur Änderung seiner Farbe und/oder seiner Transmission ausgebildet ist.

5. Kraftfahrzeug nach einem der vorangehenden Ansprüche,
**dadurch gekennzeichnet,**
**dass** das Warnmittel (7b) bei Überschreitung der komponentenspezifischen Grenztemperatur und/oder bei Vorliegen der eine Überschreitung einer komponentenspezifischen Grenztemperatur betreffenden Information (I) zur wenigstens teilweisen Beleuchtung der Komponente ausgebildet ist.

6. Kraftfahrzeug nach einem der vorangehenden Ansprüche,
**dadurch gekennzeichnet,**
**dass** das Warnmittel (7b) als ein die Komponente wenigstens teilweise direkt oder indirekt beleuchtendes Leuchtmittel (9) ausgebildet ist.

7. Kraftfahrzeug nach einem der vorangehenden Ansprüche,
**dadurch gekennzeichnet,**
**dass** die optische Warninformation von dem Warnmittel (7b) und/oder dem zusätzlichen Warnmittel (7a) emittiertes, insbesondere rötliches oder rotes, Licht ist.

8. Kraftfahrzeug nach einem der vorangehenden Ansprüche,
**dadurch gekennzeichnet,**
**dass** die Farbintensität der optischen Warninformation von der Temperatur der jeweiligen Komponente abhängt.

9. Kraftfahrzeug nach einem der vorangehenden Ansprüche,
**dadurch gekennzeichnet,**
**dass** das Warnmittel oder ein weiteres kraftfahrzeugseitig vorgesehenes Warnmittel (14) bei Überschreitung der komponentenspezifischen Grenztemperatur und/oder bei Vorliegen der eine Überschreitung einer komponentenspezifischen Grenztemperatur betreffenden Information (I) zusätzlich zur Ausgabe einer akustischen Warninformation ausgebildet ist.

10. Kraftfahrzeug nach einem der vorangehenden Ansprüche,
**dadurch gekennzeichnet,**
**dass** es wenigstens einen Näherungssensor (13) zur Ermittlung eines Abstands eines Objekts zu der Komponente umfasst, wobei das Warnmittel (7b) bei Vorliegen einer eine Unterschreitung eines bestimmten Abstandsschwellwerts durch das Objekt betreffenden Abstandsinformation zur Ausgabe der optischen Warninformation ansteuerbar ist.

11. Kraftfahrzeug nach einem der vorangehenden Ansprüche,
**dadurch gekennzeichnet,**
**dass** der jeweiligen Komponente wenigstens eine die Ist-Temperatur erfassende, mit dem Warnmittel (7b) kommunizierende Temperatursensorik (11) zur Ermittlung der Überschreitung der komponentenspezifischen Grenztemperatur zugeordnet ist.

12. Kraftfahrzeug nach einem der vorangehenden Ansprüche,
**dadurch gekennzeichnet,**
**dass** die eine Überschreitung einer komponentenspezifischen Grenztemperatur betreffende Information (I) auf einem das Aufwärm- und/oder Abkühlverhalten der jeweiligen Komponente betreffenden Modell basiert.

13. Kraftfahrzeug nach einem der vorangehenden Ansprüche,
**dadurch gekennzeichnet,**
**dass** die optische und/oder gegebenenfalls akustische Warninformation nur bei Stillstand des Kraftfahrzeugs (1) ausgebbar ist.

14. Kraftfahrzeug nach einem der vorangehenden Ansprüche,
**dadurch gekennzeichnet,**
**dass** die Komponente ein Teil der Auspuffanlage (4), insbesondere ein Endrohr (5), und/oder ein Teil der Bremsvorrichtung (3), insbesondere eine Bremsscheibe (6), und/oder das Antriebsaggregat (2) ist.

## Claims

1. Motor vehicle (1) comprising at least one drive assembly (2), at least one brake device (3) and at least one component which warms up during the operation of the drive assembly (2) and/or of the brake device (3), a temperature sensor system (11) for detecting a temperature of the component, and a control device (10) communicating with the temperature sensor system (11),
**characterised in that**
the component comprises at least one warning means (7b), which can be activated by the control device (10) so as to output visual warning information only in the presence of information (I) relating to an exceedance of a component-specific threshold temperature.

2. Motor vehicle according to claim 1,
**characterised in that**
the component comprises at least one additional warning means (7a), which is designed so as to output visual warning information when the component exceeds a component-specific threshold temperature.

3. Motor vehicle according to claim 2,
**characterised in that**
the additional warning means (7a) is designed as a thermochromic coating (8) applied at least in sections on the component and/or a thermochromic element connected to the component and/or a thermochromic material contained within the material forming the component.

4. Motor vehicle according to claim 2 or 3,
**characterised in that**
the additional warning means (7a) is designed to change its colour and/or its transmission in the case of an exceedance of the component-specific threshold temperature.

5. Motor vehicle according to any one of the preceding claims
**characterised in that**
the warning means (7b) is designed to at least partially illuminate the component in the case of an exceedance of the component-specific threshold temperature and/or in the presence of information (I) relating to an exceedance of a component-specific threshold temperature.

6. Motor vehicle according to any one of the preceding claims
**characterised in that**
the warning means (7b) is designed as a lighting means (9) that at least partially directly or indirectly illuminates the component.

7. Motor vehicle according to any one of the preceding claims
**characterised in that**
the optical warning information is in particular reddish or red light emitted by the warning means (7b) and/or the additional warning means (7a).

8. Motor vehicle according to any one of the preceding claims
**characterised in that**
the colour intensity of the optical warning information depends on the temperature of the respective component.

9. Motor vehicle according to any one of the preceding claims
**characterised in that**
the warning means or a further warning means (14) provided on the motor vehicle is additionally designed so as to output acoustic warning information in the case of an exceedance of the component-specific threshold temperature and/or in the presence of information (I) relating to an exceedance of a component-specific threshold temperature.

10. Motor vehicle according to any one of the preceding claims
**characterised in that**
said motor vehicle comprises at least one proximity sensor (13) for determining a distance of an object from the component, wherein the warning means (7b) can be activated so as to output optical warning information in the presence of distance information relating to an undershooting by the object of a determined distance threshold value.

11. Motor vehicle according to any one of the preceding claims
**characterised in that**
the respective component is assigned at least one temperature sensor system (11), which detects the actual temperature and communicates with the warning means (7b), for determining the exceedance of the component-specific threshold temperature.

12. Motor vehicle according to any one of the preceding claims
**characterised in that**
the information (I) relating to the exceedance of a component-specific threshold temperature is based on a model relating to the heating and/or cooling behaviour of the respective component.

13. Motor vehicle according to any one of the preceding claims
**characterised in that**
the visual and/or possibly acoustic warning information can only be output when the motor vehicle (1) is at a standstill.

14. Motor vehicle according to any one of the preceding claims
**characterised in that**
the component is part of the exhaust system (4), in particular an end pipe (5), and/or part of the brake device (3), in particular a brake disc (6), and/or the drive assembly (2).

## Revendications

1. Véhicule automobile (1), comprenant au moins un groupe motopropulseur (2), au moins un dispositif de freinage (3), au moins un composant chauffant lors du fonctionnement du dispositif d'entraînement (2) et/ou du dispositif de freinage (3), un système de capteur de température (11) pour détecter une température du composant et un dispositif de commande (10) communiquant avec le système de capteur de température (11),
**caractérisé en ce que**,
le composant présente au moins un moyen d'avertissement (7b), qui ne peut être commandé par le dispositif de commande (10) que si des informations (I) relatives à un dépassement d'une température limite spécifique du composant sont disponibles pour émettre des informations d'avertissement optique.

2. Véhicule automobile selon la revendication 1,
**caractérisé en ce que**,
le composant présente au moins un moyen d'avertissement supplémentaire (7a), qui est conçu pour émettre des informations d'avertissement optique lors du dépassement d'une température limite spécifique du composant par le composant.

3. Véhicule automobile selon la revendication 2,
**caractérisé en ce que**,
le moyen d'avertissement supplémentaire (7a) est conçu sous la forme d'un revêtement thermochromique (8) appliqué au moins par endroits sur le composant et/ou d'un élément thermochromique relié au composant et/ou d'un matériau thermochromique contenu dans le matériau formant le composant.

4. Véhicule automobile selon la revendication 2 ou 3,
**caractérisé en ce que**,
le moyen d'avertissement supplémentaire (7a) est conçu pour changer sa couleur et/ou sa transmission lorsque la température limite spécifique à un composant est dépassée.

5. Véhicule automobile selon l'une des revendications précédentes,
**caractérisé en ce que**,
le moyen d'avertissement (7b) est conçu pour éclairer au moins partiellement le composant lorsque la température limite spécifique à un composant est dépassée et/ou lorsque les informations (I) relative à une température limite spécifique à un composant sont dépassées.

6. Véhicule automobile selon l'une des revendications précédentes,
**caractérisé en ce que**,
le moyen d'avertissement (7b) est conçu sous la forme d'un moyen d'éclairage (9) qui éclaire au moins partiellement le composant directement ou indirectement.

7. Véhicule automobile selon l'une des revendications précédentes,
**caractérisé en ce que**,
les informations d'avertissement optique sont de la lumière, en particulier rougeâtre ou rouge, émise par les moyens d'avertissement (7b) et/ou les moyens d'avertissement supplémentaires (7a).

8. Véhicule automobile selon l'une des revendications précédentes,
**caractérisé en ce que**,
l'intensité de couleur des informations d'avertissement optique dépend de la température du composant respectif.

9. Véhicule automobile selon l'une des revendications précédentes,
**caractérisé en ce que**,
le moyen d'avertissement ou un autre moyen d'avertissement (14) prévu du côté du véhicule à moteur est conçu pour émettre des informations d'avertissement acoustique lorsque la température limite spécifique à un composant est dépassée et/ou lorsque les informations (I) relatives à une température limite spécifique à un composant sont dépassées.

10. Véhicule automobile selon l'une des revendications précédentes,
**caractérisé en ce que**,
il comprend au moins un capteur de proximité (13) pour déterminer une distance d'un objet par rapport au composant, dans lequel le moyen d'avertissement (7b) peut être commandé pour émettre les informations d'avertissement optique si l'objet a des informations de distance qui tombent en dessous d'une valeur de seuil de distance spécifique.

11. Véhicule automobile selon l'une des revendications précédentes,
**caractérisé en ce que**,
le composant respectif est associé à au moins un système de capteur de température (11) qui détecte la température réelle et communique avec les moyens d'avertissement (7b) afin de déterminer si la température limite spécifique à un composant a été dépassée.

12. Véhicule automobile selon l'une des revendications précédentes,
**caractérisé en ce que**,
les informations (I) relatives au dépassement d'une température limite spécifique à un composant sont basées sur un modèle relatif au comportement de chauffage et/ou de refroidissement du composant respectif.

13. Véhicule automobile selon l'une des revendications précédentes,
**caractérisé en ce que**,
les informations d'avertissement visuel et/ou éventuellement acoustique ne peuvent être émises que lorsque le véhicule automobile (1) est à l'arrêt.

14. Véhicule automobile selon l'une des revendications précédentes,
**caractérisé en ce que**,
le composant est une partie du système d'échappement (4), en particulier un tuyau d'extrémité (5), et/ou une partie du dispositif de freinage (3), en particulier un disque de frein (6), et/ou l'unité d'entraînement (2).
